# EUROPÄISCHE PATENTANMELDUNG

(11) **EP 3 023 162 A1**
(43) Veröffentlichungstag der Anmeldung: **25.05.2016**
(21) Anmeldenummer: 14194558.4
(22) Anmeldetag: 24.11.2014
(51) Int. Cl.: B05C 3/15, B05D 1/18, C03C 1/00, C03C 17/00, F24J 2/05, F24J 2/50

(54) **Verfahren zur Herstellung eines mit einer Funktionsschicht versehenen Bauteils aus Glas sowie Vorrichtung zur Herstellung einer derartigen Schicht**

(71) Anmelder: Heraeus Quarzglas GmbH & Co. KG, 63450 Hanau (DE)
(72) Erfinder: Söhn, Matthias, 64287 Darmstadt (DE)
(74) Vertreter: Staudt, Armin Walter

(57) **Zusammenfassung**

Bei einem bekannten Verfahren zur Herstellung eines mit einer Funktionsschicht versehenen Bauteils aus Glas wird auf der Mantelfläche eines zylinderförmigen Basiskörpers aus Glas ein flüssiges oder pastöses Beschichtungsmittel aufgebracht, unter Bildung einer Grünschicht getrocknet und zu der Funktionsschicht aus keramischem oder glasigem Werkstoff thermisch verfestigt. Um hiervon ausgehend die reproduzierbare Herstellung einer Oberflächenschicht auf einem Basiskörper bei gleichzeitig geringem Verbrauch von Beschichtungsmittel zu ermöglichen, wird erfindungsgemäß vorgeschlagen, dass das Beschichtungsmittel als Tauchbad in einem Behälter bereitgestellt wird, der einen an die Bauteil-Kontur angepassten Durchlass aufweist, wobei das Tauchbad eine Füllstandshöhe hat, die klein ist im Vergleich zur Länge des Bauteils, und dass das Bauteil in vertikaler Orientierung von unten nach oben kontinuierlich durch den Durchlass in das Tauchbad geleitet und dabei sukzessive mit der Nassschicht versehen wird.

## Beschreibung

Die Erfindung betrifft ein Verfahren zur Herstellung eines mit einer Funktionsschicht versehenen Bauteils aus Glas, umfassend folgende Verfahrensschritte:
(a) Bereitstellen eines zylinderförmigen Basiskörpers aus Glas, der eine Längsachse und eine Zylindermantelfläche sowie eine senkrecht zur Längsachse verlaufende Querschnittsfläche aufweist, die eine Bauteil-Kontur definiert,
(b) Aufbringen eines flüssigen oder pastösen, SiO₂-Teilchen enthaltenden Beschichtungsmittels unter Bildung einer Nassschicht auf mindestens einem Teil der Zylindermantelfläche,
(c) Trocknen der Nassschicht zu einer Grünschicht und
(d) Sintern der Grünschicht zu der Funktionsschicht aus keramischem oder glasigem Werkstoff.

Außerdem betrifft die Erfindung einer Vorrichtung zur Beschichtung eines zylinderförmigen Bauteils aus Glas mit einer Funktionsschicht, wobei das Glas-Bauteil eine Längsachse und eine senkrecht dazu verlaufende und von einer Bauteil-Kontur definierte Querschnittsfläche aufweist, umfassend einen Behälter zur Aufnahme eines Tauchbades aus einem flüssigen oder pastösen Beschichtungsmittel, der einen von einer Seitenwand und einem Boden begrenzten Innenraum aufweist.

Zylinderförmige Bauteile aus Quarzglas wie Rohre, Stäbe, ebene oder gebogene Platten werden beispielsweise im chemischen Apparatebau, in der Halbleiter- und Lampenfertigung sowie in der Solartechnik eingesetzt. Zur Einstellung besonderer oder zur Verbesserung der gegebenen mechanischen, optischen oder chemischen Oberflächeneigenschaften wird die Bauteiloberfläche häufig modifiziert, indem das vorab erzeugte Quarzglas-Bauteil ganz oder teilweise mit einer an den spezifischen Verwendungszweck angepassten Funktionsschicht versehen wird. Als Beispiele hierfür seien eine Verbesserung der Standzeit durch eine Beschichtung mit einem Werkstoff mit höherer Erweichungstemperatur oder besserer chemischer Beständigkeit, eine Verringerung der von dem Bauteil ausgehenden Kontaminationsgefahr durch eine Beschichtung aus hochreinem Material, sowie eine Veränderung der Wärmeisolierung oder der Reflektivität durch transparente oder opake Oberflächenschichten genannt.

### Stand der Technik

In der DE 10 2004 051 846 A1 ist ein Verfahren zur Beschichtung eines zylinderförmigen Lampenkolbens aus Quarzglas mit einer Reflektorschicht beschrieben. Die Reflektorschicht wird mittels eines Schlickerverfahrens unter Einsatz eines gießfähigen, wässrigen Schlickers erzeugt, der amorphe SiO₂-Teilchen enthält. Dieser wird als Schlickerschicht auf der Zylindermantelfläche eines sogenannten Zwillingsrohres mit acht-förmigem Querschnitt aufgetragen. Die Schlickerschicht wird zu einer Grünkörperschicht getrocknet und anschließend zu der Reflektorschicht aus opakem Quarzglas gesintert. Als Auftragsmethoden für die Schlickerschicht werden Sprühen, elektrostatisch unterstütztes Sprühen, Fluten, Schleudern, Tauchen und Aufstreichen genannt.

Bei hohen Anforderungen an die Homogenität und Gleichmäßigkeit der Schicht kommt in erster Linie die Tauchbeschichtung in Betracht. So wird beispielsweise in der DE 25 45 273 A eine Sol-Gel-Methode beschrieben, bei der eine Lichtleitfaservorform anhand eines Tauchverfahrens mit einer zusätzlichen Schicht versehen wird. Dabei wird ein stab- oder rohförmiger Trägerkörper in ein Tauchbad eingeführt, in dem ein SiO₂-haltiges Beschichtungsmittel in Form eines Sols vorliegt, genauer gesagt, einer alkoholischen Lösung von Tetraethylorthosilikat (TEOS). Nach Entnahme des Trägerkörpers aus dem Tauchbad und Verdunsten von Lösungsmittelanteilen wird die anhaftende Schicht etwa 5 min lang bei einer erhöhten Temperatur von 100 °C behandelt. Dabei kommt es zu Gelierung, so dass sich SiO₂-Partikel in einer porösen, hochreinen SiO₂-Schicht ablagern. Beim anschließenden Lichtleiterherstellungsprozess kollabiert das beschichtete Quarzglasrohr zu einem stabförmigen Gebilde, wobei die zuvor erzeugte SiO₂-Innenbeschichtung verglast wird und einen Kernbereich der Vorform bildet.

Das Eintauchen des zu beschichtenden Bauteils in das Tauchbad und das Herausziehen aus dem Tauchbad in vertikaler Richtung erfordern eine Vorrichtung mit einer Bauhöhe, die mindestens dem Doppelten der Bauteil-Länge entspricht. Dies ist besonders problematisch bei großen Beschichtungslängen von beispielsweise mehreren Metern.

Dieses Problem vermeidet eine als "Drain-Coating" bekannte Abwandlung der Tauchbeschichtung, die beispielsweise in der DE 199 33 893 A1 beschrieben ist. Dabei wird ein rohrförmiger Lampenkolben mit einer Antireflex-Innenbeschichtung aus TiO₂ versehen, indem der Innenraum des vertikal orientierten Lampenkolbens zunächst von unten nach oben mit einem flüssigen Beschichtungsmittel in Form einer Ethanolsuspension von TiO₂ und Nitrocellulose gefüllt wird. Das untere Ende des Lampenkolbens ist dabei mit einem Stopfen verschlossen und mit einer Schlauchleitung verbunden, über die das Beschichtungsmittel solange in den Lampenkolben-Innenraum gepumpt wird, bis der Flüssigkeitsspiegel die Lampenrohr-Oberkante erreicht. Anschließend wird das Beschichtungsmittel geregelt wieder abgepumpt, so dass sich der Flüssigkeitsspiegel kontinuierlich absenkt und dabei eine an der Rohr-Innenwandung haftende, nasse Innenschicht zurücklässt. Dem absinkenden Flüssigkeitsspiegel wird von oben ein Belüftungsrohr in konstantem Abstand nachgeführt. Durch dieses wird vorerwärmte Luft eingeleitet und dadurch eine Luftverwirbelungszone erzeugt, die die ethanolgesättigte Atmosphäre oberhalb des Flüssigkeitsspiegels aus dem Innenraum herausträgt, was die Trocknung der Innenschicht bewirkt. Anstelle des Belüftungsrohres oder ergänzend dazu kann zur Trocknung der Schicht auch ein Ofen eingesetzt werden, der nach unten entlang der sich bildenden Nassschicht bewegbar ist.

### Technische Aufgabenstellung

Die endgültige Schichtdicke wird maßgeblich vom Trocknungsverlauf der an der Bauteil-Oberfläche anhaftenden Nassschicht beeinflusst. Beim "Drain-Coating" wird bildet sich oberhalb des Flüssigkeitsspiegels jedoch eine an Lösungsmittel mehr oder weniger gesättigte Atmosphäre, die das Trocknen der Nassschicht behindert. Der Trocknungsverlauf kann sich auch bei Einsatz eines Belüftungsrohres und einer damit erzeugten Luftverwirbelungszone mit dem Füllstand und der veränderlichen Höhe der Luftsäule über dem Flüssigkeitsspiegel während des Beschichtungsprozesses laufend ändern. Dies erschwert die reproduzierbare Einstellung einer Beschichtung mit konstanter Schichtdicke.

Nachteilig bei den bekannten Tauchbeschichtungsmethoden ist außerdem, dass für die Bereitstellung des Tauchbades je nach Länge des zu beschichtenden Bauteils eine große Menge an teurem, zum Teil auch giftigem oder hochentzündlichem Beschichtungsmittel benötigt wird.

Der Erfindung liegt daher die Aufgabe zugrunde, ein Verfahren anzugeben, das die reproduzierbare Herstellung einer Oberflächenschicht auf einem Basiskörper bei gleichzeitig geringem Verbrauch von Beschichtungsmittel ermöglicht.

Weiterhin liegt der Erfindung die Aufgabe zugrunde, eine Vorrichtung zur Durchführung des Verfahrens bereitzustellen, deren Bauhöhe die Länge des zu beschichtenden Bauteils nicht wesentlich übersteigen muss und die mit einer vergleichsweise geringen Menge an Beschichtungsmittel zu betreiben ist.

### Allgemeine Darstellung der Erfindung

Hinsichtlich des Verfahrens wird diese Aufgabe ausgehend von dem eingangs genannten Verfahren erfindungsgemäß dadurch gelöst,
(I) dass das Beschichtungsmittel als Tauchbad in einem Behälter bereitgestellt wird, der einen Durchlass aufweist,
(II) wobei das Tauchbad eine Füllstandshöhe hat, die klein ist im Vergleich zur Länge des Bauteils,
(III) und dass das Bauteil in vertikaler Orientierung von unten nach oben kontinuierlich durch den Durchlass in das Tauchbad geleitet und dabei sukzessive mit der Nassschicht versehen wird.

Wie auch bei den bekannten Tauchverfahren wird das Beschichtungsmittel als Tauchbad in einem Behälter bereitgestellt. Dazu im Unterscheid ist beim erfindungsgemäßen Verfahren die Füllstandshöhe des Tauchbades niedriger als die Beschichtungslänge des Bauteils. Dies reduziert die zur Bereitstellung des Tauchbades notwendige Menge an Beschichtungsmittel und dessen Restmenge nach Abschluss des Beschichtungsprozesses.

Zur Beschichtung der Zylindermantelfläche über die Beschichtungslänge -- in der Regel ist das die Gesamtlänge des Bauteils - wird das Bauteil durch das Tauchbad zonenweise hindurch geleitet. Eine Anpassung der Tauchbad-Höhe an die Länge des zu beschichtenden Bauteils ist nicht erforderlich, so dass Bauteile mit gleicher Querschnitts-Kontur unabhängig von ihrer Länge mit derselben Anlage beschichtet werden können.

Der Beschichtungsmittel-Behälter hat einen Innenraum zur Aufnahme des Tauchbades. Der Durchlass ist in demjenigen Wandungsbereich vorgesehen, der mit dem Tauchbad in Kontakt ist und er ist so angeordnet, dass er einen Durchtritt des Bauteils durch das Tauchbad in vertikaler Orientierung von unten nach oben ermöglicht. Die "Füllstandshöhe" ist der maximale Abstand zwischen Durchlass und Tauchbadspiegel.

Die Querschnitts-Kontur des zylinderförmigen Bauteils ist im einfachsten Fall rotationssymmetrisch; sie kann aber auch jede andere Form haben. Wird die Funktionsschicht auf einem Bauteil mit nicht-kreisrunder Bauteil-Kontur aufgebracht, bildet der Durchlass beispielsweise einen geraden oder gekrümmten Spalt. Liegt das Bauteil zum Beispiel als Halbschale vor, so bildet der Durchlass einen Teilkreis.

Die "Nassschicht" bildet sich auf der Beschichtungsfläche des Bauteils beim Verlassen des Tauchbades. Die Dicke der dabei am Zylindermantel haftenden Nassschicht wird von der Art des Beschichtungsmittels, der Benetzbarkeit der Oberfläche durch das Beschichtungsmittel, die Geschwindigkeit der Relativbewegung zwischen Tauchbad und Bauteil, vom Austrittswinkel zwischen Zylindermantel und Tauchbad-Oberfläche und von der Trocknung der Nassschicht bestimmt. Um ein reproduzierbares Trocknungsverhalten der Nassschicht und damit bei ansonsten vorgegebenen Parametern eine gleichmäßige Schichtdicke zu gewährleisten, erfolgt die Durchleitung des Bauteils durch das Tauchbad relativ zur Zylindermantelfläche von unten nach oben. Dabei wird entweder das Tauchbad am oberen Ende beginnend entlang der zu beschichtenden Zylindermantelfläche nach unten bewegt, oder - in kinematischer Umkehr - wird das Bauteil von unten nach oben durch das Tauchbad hindurchgeschoben. Beiden Bewegungsmodi ist gemeinsam, dass das mit der Nassschicht benetzte Bauteil nach oben aus dem Tauchbad heraustritt. Die Dicke der Nassschicht wird nicht durch eine Austrittsdüse vorgegeben, sondern sie stellt sich im Zusammenspiel von Viskosität und Dichte des Beschichtungsmittels sowie der Relativgeschwindigkeit zwischen Bauteil und Tauchbad ein. Tritt das Bauteil senkrecht zur Tauchbadoberfläche aus, bildet sich um den Zylindermantel eine allseitig gleichmäßig dicke Nassschicht. Bei von der Oberflächennormalen abweichenden Austrittsrichtungen werden unterschiedliche Schichtdicken um den Zylindermantel erhalten, was in der Regel nicht erwünscht ist. Die kontinuierlich nach oben aus dem Tauchbad austretende Nassschicht ist unmittelbar der Atmosphäre ausgesetzt, so dass eine gute und gleichmäßige Abdampfung der Flüssigkeit, insbesondere des Lösungsmittels, sichergestellt ist. Die Trocknungswirkung ist dabei für jede Nassschichtzone entlang des Zylindermantels gleich, so dass eine gleichmäßige Schichtdicke erhalten wird. Die Beschichtung erstreckt sich über eine Beschichtungslänge, die der gesamten Bauteillänge oder einem Teil davon entspricht. Das Bauteil wird vollständig oder teilweise durch den Durchlass in das Tauchbad geleitet. Die nach dem teilweisen oder vollständigen Trocknen der Nassschicht erhaltene Grünschicht wird thermisch verfestigt und dabei verdichtet. Das thermische Verfestigen geschieht durch Erhitzen in einem Ofen, mittels einer Verbrennungsflamme, mittels Plasma, Lichtbogen oder mittels eines Lasers mit einer vorgegebenen Arbeitswellenlänge. Es wird eine verdichtete, glasige oder keramische Funktionsschicht erhalten, die t je nach Anwendung transparent oder vollständig oder teilweise opak ist. Unabhängig davon kann die Funktionsschicht porenfrei sein oder Poren enthalten. Sie zeichnet sich durch gleichmäßige Dicke, Rissfreiheit und durch hohe Haftfestigkeit auf dem Quarzglas des Basiskörpers aus. In ihren Eigenschaften ist sie durch einfache Verfahrensänderungen- etwa der Sintertemperatur oder der Zugabe von Dotierstoffen für eine Vielzahl konkreter Anwendungen, wie etwa für den Einsatz in der Halbleiterfertigung oder der Lampen- und Reaktorfertigung, modifizierbar. Halbschalenförmige Glaszylinder, die an Innen- und Außenwandung mit einer Antireflexschicht versehen sind, werden beispielsweise in solarthermischen Anlagen eingesetzt.

Bei einer bevorzugten Verfahrensvariante ist vorgesehen, dass der Durchlass von mindestens einem elastisch verformbaren Dichtelement begrenzt wird, das unmittelbar oder mittelbar an der Zylindermantelfläche anliegt.

Das Dichtelement definiert und begrenzt den Durchlass und es dient gleichzeitig zur Abdichtung. Es besteht ganz oder teilweise aus einem elastisch verformbaren Werkstoff, einem mit Gas, Flüssigkeit oder Gel gefüllten Behältnis oder es ist aufblasbar. Die Elastizität ermöglicht zum einen eine Veränderung von Form und Größe des Durchlasses in gewissem Umfang; beispielsweise einen Ausgleich bei axialen Dickenschwankungen des Bauteils und sie erleichtert das Abdichten des Durchlasses, indem es in Richtung der Zylindermantelfläche des Bauteils gepresst wird. Geeignete elastische Dichte sind beispielsweise Elastomerschaum oder Silikon. Durch Reibung des Glas-Bauteils mit dem den Durchlass begrenzenden Werkstoff kann es zu elektrostatischer Aufladung kommen. Zur Ableitung der Ladung hat sich ein Dichtelement aus elektrisch leitfähigem Werkstoff bewährt, wie etwa aus elektrisch leitfähigem Kunststoff. Das Dichtelement liegt unmittelbar oder mittelbar an der Zylindermantelfläche an. Bei einer mittelbaren Anlage ist zwischen dem Rand des Durchlasses und der Zylindermantelfläche noch ein weiteres Element vorgesehen. Dieses ist in dem Fall am Rand des Durchlasses fixiert wird hier als "Gleitelement" bezeichnet. Das Gleitelement kann beispielsweise die Gleitbewegung zwischen Behälter und Bauteil erleichtern oder es vermindert elektrostatische Aufladung. Daher ist das Gleitelement bevorzugt elektrisch leitfähig. Beide genannte Funktionen werden von Kohlenstoff- und Graphitwerkstoffen erfüllt, wie etwa Graphitfasermatten oder Kohlefaserfilz. Kohlenstoff hat gegenüber anderen elektrisch leitfähigen Werkstoffen, wie etwa metallhaltigen Werkstoffen, den zusätzlichen Vorteil, dass etwaiger Abrieb bei niedriger Temperatur rückstandsfrei verbrannt werden kann.

Zur Veränderung von Form und Größe des Durchlasses und zum Anpressen des Dichtelements gegen den Zylindermantel des Bauteils hat es sich bewährt, wenn das Dichtelement zwischen einem oberen und einem unteren Kompressionskörper angeordnet ist, wobei die Kompressionskörper mittels mindestens eines Zug-oder Spannelementes gegeneinander und gegen das Dichtelement verschiebbar sind und infolge dieser Verschiebung das Dichtelement so verformt wird, dass sich der Durchlass verengt.

Das Dichtelement ist dabei zwischen zwei Kompressionskörpern angeordnet und wird mittels diesen zusammengepresst, so dass es sich verformt und dabei den Durchlass verengt. Bei nachlassender Kompression des Dichtelements erweitert sich der Durchlass entsprechend. Im einfachsten Fall ist das Dichtelement sandwichartig zwischen zwei plattenförmigen Kompressionskörpern angeordnet. Diese können Bestandteil des Behälter-Bodens sein.

Das Bauteil wird vollständig oder teilweise durch den Durchlass in das Tauchbad geleitet. Insbesondere um eine Beschichtung des Bauteils über seine gesamte Länge zu vereinfachen, wird das Bauteil vor dem Aufbringen des Beschichtungsmittels vorzugsweise an einem stirnseitigen Ende oder an beiden Enden mit einem Dummy-Bauteil mit gleicher Querschnittskontur verbunden.

Das Dummy-Bauteil oder die Dummy-Bauteile sind alternativ oder ergänzend auch zur Halterung des Bauteils nutzbar.

Bewährte Beschichtungsmittel - insbesondere für die Herstellung einer Antireflexschicht - enthalten eine Mischung aus SiO₂-Sol und Tetraethylorthosilikat, wobei eine Funktionsschicht aus einem porösen Werkstoff erzeugt wird.

Bei einem alternativen Beschichtungsmittel wird eine SiO₂-haltige Dispersion eingesetzt, die eine Dispersionsflüssigkeit und Feststoff-Teilchen enthält, wobei die Feststoff-Teilchen eine SiO₂-Teilchen-Grobfraktion mit einer Teilchengrößenverteilung mit einem D₅₀-Wert im Bereich zwischen 1 µm und 50 µm, sowie eine Feinfraktion aus SiO₂-Nanoteilchen mit Teilchengrößen von weniger als 100 nm mit einem auf den gesamten Feststoffgehalt bezogenen Gewichtsanteil zwischen 0,2 Gew.-% und 10 Gew.-% umfassen, wobei der Feststoffgehalt der Dispersion im Bereich zwischen 60 bis 80 Gew.-% liegt.

Der Feststoffgehalt bestimmt maßgeblich die Viskosität und das Fließverhalten der Dispersion. Einerseits soll die Viskosität der Dispersion beim Auftragen niedrig sein, um eine gleichmäßige Verteilung der Schicht auf der Zylindermantelfläche zu ermöglichen, was durch einen geringen Feststoffgehalt begünstigt wird. Andererseits sollen ein Abfließen der Schicht und eine Rissbildung beim Trocknen vermieden werden, was durch einen hohen Feststoffgehalt begünstigt wird, der in aller Regel auch mit einer hohen Viskosität einhergeht. Die sich widersprechenden Anforderungen sind durch den Zusatz von SiO₂-Nanoteilchen als Kompromiss erfüllbar. Der Zusatz von SiO₂-Nanoteilchen verändert das Fließverhalten einer derartig gefüllten Dispersion in Richtung eines eher strukturviskosthixotropen Verhaltens. Dies zeigt sich darin, dass sich die Dispersion unter Scherbeanspruchung leichter verflüssigt. Dies geschieht im Beschichtungsprozess infolge der mechanischen Einwirkung von Scherkräften beim Austritt des Bauteils aus dem Tauchbad. Die gleichmäßige Verteilung und Schichtausbildung wird dadurch begünstigt. Bei Nachlassen der Scherbeanspruchung - also nach Ausbildung der Nassschicht - nimmt die Viskosität der Dispersion jedoch nicht weiter ab. Um diesen Effekt zu erzielen, genügen geringe Mengen an SiO₂-Nanoteilchen von 0,2 Gew.-% (bezogen auf die Gesamt-Feststoffmasse der Dispersion). Gehalte von mehr als 10 Gew.-% können hingegen zu einer verstärkten Schrumpfung beim Trocknen von Nass- und Grünschicht führen.

Es hat sich bewährt, wenn das Bereitstellen des Beschichtungsmittels ein kontinuierliches Nachfüllen in den Behälter umfasst.

Dadurch wird verbrauchtes Beschichtungsmittel ersetzt, so dass der Füllstand des Tauchbades im Verlauf des Beschichtungsprozesses möglichst konstant gehalten werden kann. Dies erleichtert die Erzeugung von Nassschichten mit konstanter Dicke, insbesondere wenn die Menge an Beschichtungsmittel im Tauchbad gering ist im Vergleich zum Verbrauch während eines Beschichtungsvorgangs.

Dazu trägt eine weitere vorteilhafte Maßnahme bei, gemäß der der Behälter mit einem Überlauf versehen ist, aus dem überschüssiges Beschichtungsmittel entfernt wird.

Bei kontinuierlichem Nachfüllen des Beschichtungsmittels kann die Tauchbadhöhe leicht als Abstand zwischen Boden und Überlauf konstant gehalten werden. Dies ist eine vorteilhafte aber keine notwendige Maßnahme des Beschichtungsverfahrens.

Wie bereits weiter oben erläutert, werden beim erfindungsgemäßen Verfahren für jede Nassschichtzone entlang des Zylindermantels, die nach oben aus dem Tauchbad austritt dieselben Bildungs- und Trocknungsbedingungen gewährleistet. Jede Nassschichtzone wird unmittelbar der Atmosphäre ausgesetzt, so dass ein gleichmäßiges Abdampfen der Flüssigkeit sichergestellt ist.

Ergänzend dazu ist bei einer weiteren bevorzugten Verfahrensmodifikation vorgesehen, dass das beschichtete Bauteil oberhalb des Tauchbades mittels einer Trocknungseinrichtung getrocknet wird, die unter Einhaltung eines konstanten Abstandes zum Tauchbad in Richtung der Bauteil-Längsachse bewegt wird.

Die Trocknungseinrichtung ist beispielsweise als Gasstrom oder Heizmittel ausgeführt und wirkt unmittelbar oberhalb des Tauchbades auf die austretende Nassschicht ein.

Hinsichtlich der Vorrichtung zur Beschichtung eines zylinderförmigen Bauteils aus Glas mit einer Funktionsschicht wird die oben genannte Aufgabe ausgehend von einer Vorrichtung der eingangs genannten Gattung erfindungsgemäß dadurch gelöst, dass der Behälter einen an die Bauteil-Kontur angepassten Durchlass aufweist, und mit einem Linearantrieb zur translatorischen Verschiebung des Behälters entlang der Bauteil-Längsachse in vertikaler Richtung verbunden ist.

Der Behälter zur Aufnahme des Tauchbades aus dem Beschichtungsmittel hat einen Innenraum zur Aufnahme des Tauchbades. Der Durchlass ist in demjenigen Wandungsbereich vorgesehen, der mit dem Tauchbad in Kontakt ist und er ist so angeordnet, dass er einen Durchtritt des Bauteils durch das Tauchbad in vertikaler Orientierung von unten nach oben ermöglicht. Im einfachsten Fall ist der Innenraum von einer Seitenwand und einem Boden begrenzt, wobei im Boden der an die Bauteil-Kontur angepasste Durchlass vorgesehen ist. Seitenwand und Boden bilden gegebenenfalls einen einteiligen integralen Verbund oder der Boden ist lösbar mit der Seitenwand verbunden. Der lösbare Verbund ermöglicht den Einsatz von Böden mit unterschiedlichen Durchlass-Konturen im ansonsten gleichen Behälter.

Zur reversierenden translatorischen Verschiebung des Behälters entlang der Bauteil-Längsachse in vertikaler Richtung ist bei der erfindungsgemäßen Vorrichtung ein Linearantrieb vorgesehen. Der Linearantrieb umfasst einen Elektromotor und mechanische oder mechatronische Komponenten zur Halterung des Behälters und zur Ausführung der translatorischen Bewegung mit geringer Reibung. Er verfügt über eine Linearführung, die Querkräfte aufnehmen kann, ohne dadurch verformt zu werden.

Bei der Verschiebung des Behälters entlang der Bauteil-Mantelfläche ist das Bauteil selbst arretiert. Die Abmessung des Behälters in vertikaler Richtung gesehen - also die Behälter-Höhe - ist klein im Vergleich zur Beschichtungslänge des Bauteils. Die Höhe des Behälters liegt bevorzugt im Bereich von 5 bis 30 cm, wohingegen die Beschichtungslänge mehrere Meter betragen kann. Eine Anpassung der Behälter-Höhe an die Länge des zu beschichtenden Bauteils ist nicht erforderlich, so dass Bauteile mit gleicher Querschnitts-Kontur unabhängig von ihrer Länge mit ein- und derselben Vorrichtung beschichtet werden können.

Das zu beschichtende Bauteil wird durch das im Innenraum des Behälters bereitgestellte Tauchbad hindurchgeleitet. Zu diesem Zweck ist der Behälter mit einem Durchlass versehen, der bei einer bevorzugten Ausführungsform von mindestens einem elastisch verformbaren Dichtelement begrenzt wird, das zwischen einem oberen und einem unteren Kompressionskörper angeordnet ist, wobei die Kompressionskörper mittels mindestens eines Zug- oder Spannelementes gegeneinander und gegen das Dichtelement verschiebbar sind und infolge dieser Verschiebung das Dichtelement so verformbar ist, dass sich der Durchlass verengt.

Das Dichtelement definiert und begrenzt den Durchlass und es dient gleichzeitig zur Abdichtung des Durchlasses. Es besteht ganz oder teilweise aus einem elastisch verformbaren Werkstoff, einem mit Gas, Flüssigkeit oder Gel gefüllten Behältnis oder es ist aufblasbar. Die Elastizität ermöglicht zum einen eine Veränderung von Form und Größe des Durchlasses in gewissem Umfang; beispielsweise einen Ausgleich bei axialen Dickenschwankungen des Bauteils und sie erleichtert das Abdichten des Durchlasses, indem es in Richtung der Zylindermantelfläche des Bauteils gepresst wird. Geeignete elastische Dichte sind beispielsweise Elastomerschaum oder Silikon. Zwecks Ableitung elektrostatischer Aufladung hat sich ein Dichtelement aus elektrisch leitfähigem Werkstoff bewährt, wie etwa aus elektrisch leitfähigem Kunststoff.

Das Dichtelement liegt unmittelbar oder mittelbar an der zu beschichtenden Zylindermantelfläche an. Eine mittelbare Anlage an der Zylindermantelfläche ist gegeben, wenn zwischen dem Dichtelement und der Zylindermantelfläche ein zusätzliches Element vorgesehen ist, das als "Gleitelement" bezeichnet werden kann. Gegebenenfalls ist das Gleitelement vorzugsweise elektrisch leitfähig und enthält Kohlenstoff. Das Gleitelement kann beispielsweise die Gleitbewegung zwischen Behälter und Bauteil erleichtern oder es vermindert elektrostatische Aufladung. Beide genannte Funktionen werden von Kohlenstoff- und Graphitwerkstoffen erfüllt, wie etwa Graphitfasermatten oder Kohlefaserfilz.

Zur Veränderung von Form und Größe des Durchlasses und zum Anpressen des Dichtelements gegen den Zylindermantel des Bauteils ist das Dichtelement zwischen einem oberen und einem unteren Kompressionskörper angeordnet. Dadurch, dass die beiden Kompressionskörper mittels mindestens eines Zug- oder Spannelementes gegeneinander und gegen das Dichtelement verschiebbar sind, kann das Dichtelement so verformt werden, dass sich der Durchlass verengt. Im einfachsten Fall ist das Dichtelement sandwichartig zwischen zwei plattenförmigen Kompressionskörpern angeordnet. Diese können Bestandteil des Behälter-Bodens sein.

Die erfindungsgemäße Vorrichtung ist zur Durchführung des erfindungsgemäßen Verfahrens geeignet. Vorteilhafte Ausgestaltungen der erfindungsgemäßen Vorrichtung ergeben sich aus den Unteransprüchen. Soweit in den Unteransprüchen angegebene Ausgestaltungen der Vorrichtung den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Ausführungsbeispiel

Nachfolgend wird die Erfindung anhand von Ausführungsbeispielen und einer Zeichnung näher erläutert. Dabei zeigt in schematischer Darstellung m Einzelnen:
- **Figur 1**: eine Ausführungsform einer Vorrichtung für die Herstellung eines beschichteten, zylinderförmigen Quarzglas-Bauteils in einem Längsschnitt, und
- **Figur 2**: eine Draufsicht auf den Innenraum eines Behälters zur Aufnahme des Beschichtungsmittels.

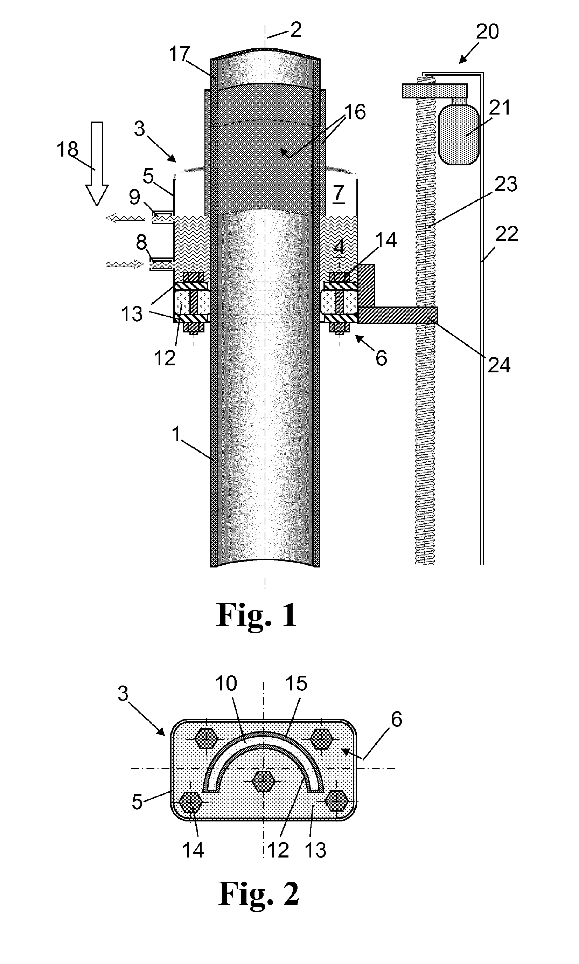

Die in **Figur 1** schematisch gezeigte Vorrichtung wird zur Herstellung eines halbschalenförmigen Quarzglas-Bauteils 1 eingesetzt, das beidseitig, also an seiner inneren Mantelfläche (seiner Innenseite) und an seiner äußeren Mantelfläche (seiner Außenseite) Funktionsschichten aufweist. Im Querschnitt senkrecht zur Längsachse 2 zeigt diese Bauteil 1 somit eine halbkreisförmige Kontur.

Die Beschichtungsanlage umfasst einen Behälter 3 zur Aufnahme eines flüssigen Beschichtungsmittels, das in dem Behälter 3 als Tauchbad 4 vorliegt. Zu diesem Zweck weist der Behälter 3 ein in der Draufsicht rechteckige Seitenwand 5 auf, wie aus der Darstellung von **Figur 2** erkennbar. Die Seitenwand 5 ist flüssigkeitsdicht mit einem Boden 6 verbunden. Seitenwand 5 und Boden 6 begrenzen den Behälter-Innenraum 7 zur Aufnahme des Tauchbades 4.

Zur kontinuierlichen Zufuhr des Beschichtungsmittels verfügt der Behälter 3 über einen Einlass 8, der über eine Schlauchleitung mit einem Vorratsbehälter für das Beschichtungsmittel verbunden ist. Die maximale Tauchbadhöhe beträgt 65 mm; sie wird von einem Ablauf 9 für das Beschichtungsmittel vorgegeben. Die Füllmenge des Tauchbades liegt bei 3 Litern. Die Gesamthöhe der BehälterSeitenwand beträgt 130 mm.

Das zu beschichtende Bauteil 1 wird durch das im Innenraum 7 des Behälters 3 bereitgestellte Tauchbad 4 hindurchgeleitet. Zu diesem Zweck hat der Boden 6 eine halbkreisförmige Bodenöffnung 10 (siehe Figur 2), die an die Querschnitts-Kontur des Bauteils 1 angepasst ist. Die Bodenöffnung 10 wird von einer elastisch verformbaren Schaumstoffmatte 12 begrenzt, die gleichzeitig als Dichtungsmittel dient. Die Schaumstoffmatte 12 besteht aus geschlossenzelligem Silikonschaum; und sie hat im nicht komprimierten Zustand eine Mattenhöhe von 10mm. Sie ist sandwichartig zwischen zwei 20 mm dicken Kompressionsplatten 13 aus Kunststoff eingeschlossen, die mittels Schrauben 14 miteinander verbunden sind. Die Kompressionsplatten 13 haben jeweils eine halbkreisförmige Öffnung 15 (siehe Figur 2), die deckungsgleich zueinander und etwas größer als die Bodenöffnung 10 der Schaumstoffmatte 12 im nicht komprimierten Zustand ist.

Für die Absenkbewegung des Behälters 3 entlang der Mantelfläche des Bauteils 1 ist eine Linearverschiebeeinheit 20 vorgesehen (in Figur 1 ist nur der obere Bereich dargestellt). Diese umfasst einen Elektromotor 21, der eine in einem Rahmen 22 vertikal drehbar gelagerte Spindel 23 antreibt. An der Spindel 23 ist ein Schlitten 24 geführt, an dem der Behälter 3 montiert ist.

Nachfolgend werden Ausführungsbeispiele des erfindungsgemäßen Verfahrens zur Herstellung beschichteter Bauteile unter Einsatz dieser Vorrichtung näher erläutert.

### Beispiel 1

Eine Halbschale 1 aus Quarzglas soll über ihre gesamte Länge (3 Meter) mit Antireflexschichten an der Innenseite und an der Außenseite versehen werden. Die Halbschale 1 wird zunächst verlängert, indem an beiden stirnseitigen Enden Dummykörper 17 angeschweißt werden (Figur 1 zeigt den am oberen Ende), die dieselbe Querschnitts-Kontur haben. Die verlängerte Halbschale 1 wird in vertikale Ausrichtung gebracht und dabei das untere Ende in einem Sockel (im Ausschnitt von Figur 1 nich t dargestellt) arretiert. Der Behälter 3 wird auf den oberen Dummykörper 17 aufgesetzt, so dass dieser in die Bodenöffnung 10 hineinragt.

Anschließend wird die Bodenöffnung 10 an die Querschnitts-Kontur angepasst. Hierzu werden die Kompressionsplatten 13 mittels der Schrauben 14 gegeneinander gezogen, so dass die Schaumstoffmatte 12 zusammengepresst wird und sich an die Zylindermantelflächen des Dummykörpers 17 anschmiegt. Die Kompression der Schaumstoffmatte 12 wird dabei so eingestellt, dass sich einerseits eine hinreichende Abdichtung der Bodenöffnung 10 und ergibt und andererseits die Halbschale 1 in der Bodenöffnung 10 möglichst widerstandsfrei in vertikaler Richtung gleiten kann.

Danach wird der Behälter mit einer Antireflexschicht-Lösung gefüllt. Diese setzt sich aus folgenden Komponenten zusammen (Volumenanteile in %):

### Rezeptur:

| | | |
|---|---|---|
| K1 | Ethanol (absolut) | 93 % |
| K2 | TEOS | 0,5 % |
| K3 | Kiesellol-Lösung | 3,8 % |
| K4 | HCl | 1% |
| K% | Wasser | Rest |

Die Kiesellol-Lösung ist eine handelsübliche Suspension feinteiliger, sphärischer SiO₂-Teilchen. Anschließend wird der Behälter 2 an der Zylindermantelfläche des Dummykörpers 17 und des Bauteils 1 mittels der Linearverschiebeeinheit 20 mit einer konstanten Geschwindigkeit von etwa 5 mm/s nach unten gezogen, wie vom Richtungspfeil 18 angezeigt. Dabei bildet sich an allen Mantelflächen jeweils eine Nassschicht 16 mit einer Dicke von etwa 150 nm aus.

Der Verbrauch an Antireflexschicht-Lösung während des Beschichtungsprozesses ist gering, so dass sich die voreingestellte Tauchbadhöhe von 65 mm nur wenig ändert und auf eine Zufuhr zum Auffüllen des Tauchbades 4 verzichtet werden kann.

Zum Abschluss des Beschichtungsvorgangs wird die im Behälter 3 verbleibende Antireflexschicht-Lösung abgepumpt und die mit der bereits angetrockneten Nassschicht 16 beschichte Quarzglas-Halbschale nach oben aus dem Behälter 3 herausgehoben.

Die so erzeugte Beschichtung 16 wird vollständig an Luft getrocknet und anschließend in einem Ofen langsam auf eine Temperatur von 650 °C aufgeheizt und bei dieser Temperatur 2 h behandelt. Es wird eine rissfreie Antireflexschicht aus nanoporösem Glas erhalten, die sich durch eine hohe Gleichmäßigkeit ihrer Dicke auszeichnet, die im Mittel bei 125 nm liegt.

Die mit dieser Antireflexschicht beschichteten, halbschalenförmigen Quarzglasbautele werden in solarthermischen Anlagen eingesetzt.

### Beispiel 2

Die Mantelflächen einer Halbschale 1 aus Quarzglas wie in Beispiel 1 beschrieben, sollen über ihre gesamte Länge (3 Meter) mit einer Schicht aus opakem Quarzglas versehen werden. Die Vorbereitung der Halbschale 1, das Einsetzen in die Beschichtungsanlage und die Anpassung der Bodenöffnung 10 des Tauchbades 4 erfolgen so wie anhand Beispiel 1 beschrieben.

Als Beschichtungsmittel wird eine Dispersion eingesetzt, die unterschiedliche SiO₂-Teilchenkomponenten enthält, nämlich SiO₂-Nanoteilchen mit Durchmessern um 40 nm (pyrogene Kieselsäure) sowie handelsübliche, sphärische, amorphe SiO₂-Teilchen. Die sphärischen, amorphen SiO₂-Teilchen sind synthetisch hergestellt und liegen in standardisierten Teilchengrößenverteilungen mit D₅₀-Werten von 5 µm, 15 µm, 30 µm und 40 µm vor; sie werden vorab in einem Heißchlorierverfahren gereinigt. Diese SiO₂-Teiclhenkomponenten werden in folgender Rezeptur eingesetzt, wobei jede Komponente mit dem Buchstaben R und ihrem jeweiligen D₅₀-Wert als Appendix bezeichnet ist:

### Rezeptur (Gewichtsanteile jeweils normiert auf 1 kg Feststoff):

| | |
|---|---|
| R₃₀ | 250 g |
| R₁₅ | 500 g |
| R₅ | 200 g |

Pyrogene Kieselsäure: 50 g mit BET-Oberfläche von 60 m²/g

Die SiO₂-Teilchenkomponenten werden in dieser Zusammensetzung in eine Dispersionsflüssigkeit eingemischt und homogenisiert, so dass sich ein Feststoffgehalt von 75 Gew.-% ergibt. Die Dispersionsflüssigkeit besteht aus 70 Vol.-% deionisiertem Wasser mit einer Leitfähigkeit von weniger als 3 µS und 30 Vol.-% Ethanol.

Der so erzeugte Schlicker zeigt ein thixotropes Fließverhalten. Er wird in den Behälter 3 gefüllt und dieser anschließend an der Zylindermantelfläche des Dummykörpers 17 und des Bauteils 1 mittels der Linearverschiebeeinrichtung 20 mit konstanter Geschwindigkeit von etwa 20 cm/min nach unten (Richtungspfeil 18) gezogen. Dabei bildet sich an den Mantelflächen jeweils eine Nassschicht 16 mit einer Dicke von etwa 350 µm. Um die Tauchbadhöhe und der Flüssigkeitsspiegel während der Beschichtungsprozesses konstant auf 65 mm zu halten, wird dem Tauchbad 4 kontinuierlich Schlicker über den Einlass 8 zugeführt und etwaiger Überschuss wird über den Ablauf 9 abgeführt.

Die so erzeugte Beschichtung 16 wird vollständig an Luft getrocknet und anschließend in einem Ofen langsam auf eine Temperatur von 1350 °C aufgeheizt und bei dieser Temperatur 2h behandelt. Nach diesem Sinterprozess liegt die Beschichtung als glasige, opake SiO₂-Schicht vor, die sich durch eine hohe Gleichmäßigkeit ihrer Dicke auszeichnet, die im Mittel bei 300 µm liegt.

### Beispiel 3

Es wird ein Beschichtungsprozess durchgeführt, wie anhand Beispiel 1 beschrieben. Im Unterschied dazu wird vor der Anpassung der Bodenöffnung 10 an die Halbschalen-Kontur des zu beschichtenden Bauteils ein Kohlefaserfilz in die Bodenöffnung eingeklebt, so dass dieser den Öffnungsrand vollständig abdeckt. Der Kohlefaserfilz hat eine Dicke von 1 mm. Er verbessert beim anschließenden Beschichtungsvorgang den Gleitvorgang zischen Bauteil 1 und Öffnungsrand und er leitet elektrostatische Ladung ab. Zu diesem Zweck ist er mit einer Erdungsmasse verbunden.

## Patentansprüche

1. Verfahren zur Herstellung eines mit einer Funktionsschicht versehenen Bauteils aus Glas, umfassend folgende Verfahrensschritte
(a) Bereitstellen eines zylinderförmigen Basiskörpers aus Glas, der eine Längsachse und eine Zylindermantelfläche sowie eine senkrecht zur Längsachse verlaufende Querschnittsfläche aufweist, die eine Bauteil-Kontur definiert,
(b) Aufbringen eines flüssigen oder pastösen Beschichtungsmittels unter Bildung einer Nassschicht auf mindestens einem Teil der Zylindermantelfläche,
(c) Trocknen der Nassschicht zu einer Grünschicht und
(d) Thermisches Verfestigen der Grünschicht zu der Funktionsschicht aus keramischem oder glasigem Werkstoff,
**dadurch gekennzeichnet,**
(I) **dass** das Beschichtungsmittel als Tauchbad in einem Behälter bereitgestellt wird, der einen an die Bauteil-Kontur angepassten Durchlass aufweist,
(II) wobei das Tauchbad eine Füllstandshöhe hat, die klein ist im Vergleich zur Länge des Bauteils,
(III) und **dass** das Bauteil in vertikaler Orientierung von unten nach oben kontinuierlich durch den Durchlass in das Tauchbad geleitet und dabei sukzessive mit der Nassschicht versehen wird.

2. Verfahren nach Anspruch 1, **dadurch gekennzeichnet, dass** der Durchlass von mindestens einem elastisch verformbaren Dichtelement begrenzt wird, das unmittelbar oder mittelbar an der Zylindermantelfläche anliegt.

3. Verfahren nach Anspruch 2, **dadurch gekennzeichnet, dass** das Dichtelement in dem Sinne mittelbar an der Zylindermantelfläche anliegt, dass zwischen Dichtelement und Zylindermantelfläche ein Gleitelement vorgesehen ist.

4. Verfahren nach Anspruch 3, **dadurch gekennzeichnet, dass** das Gleitelement elektrisch leitfähig ist, und vorzugsweise Kohlenstoff enthält.

5. Verfahren nach einem der Ansprüche 2 bis 4, **dadurch gekennzeichnet, dass** das Kunststoffelement zwischen einem oberen und einem unteren Kompressionskörper angeordnet ist, wobei die Kompressionskörper mittels mindestens eines Zug- oder Spannelementes gegeneinander und gegen das Dichtelement verschiebbar sind und infolge dieser Verschiebung das Dichtelement so verformt wird, dass sich der Durchlass verengt.

6. Verfahren nach einem der vorhergehenden Ansprüche, **dadurch gekennzeichnet, dass** das Bauteil vor dem Aufbringen des Beschichtungsmittels an mindestens einem stirnseitigen Ende mit einem Dummy-Bauteil mit gleicher Querschnittskontur verbunden wird.

7. Verfahren nach einem der vorhergehenden Ansprüche, **dadurch gekennzeichnet, dass** das Beschichtungsmittel eine Mischung aus SiO₂-Sol und Tetraethylorthosilikat umfasst, und dass eine Funktionsschicht aus einem porösen Werkstoff erzeugt wird.

8. Verfahren nach einem der Ansprüche 1 bis 6, **dadurch gekennzeichnet, dass** das Beschichtungsmittel eine SiO₂-haltige Dispersion ist, die eine Dispersionsflüssigkeit und Feststoff-Teilchen enthält, wobei die Feststoff-Teilchen eine SiO₂-Teilchen-Grobfraktion mit einer Teilchengrößenverteilung mit einem D₅₀-Wert im Bereich zwischen 1 µm und 50 µm, sowie eine Feinfraktion aus SiO₂-Nanoteilchen mit Teilchengrößen von weniger als 100 nm mit einem auf den gesamten Feststoffgehalt bezogenen Gewichtsanteil zwischen 0,2 Gew.-% und 10 Gew.-% umfassen, wobei der Feststoffgehalt der Dispersion im Bereich zwischen 60 bis 80 Gew.-% liegt.

9. Verfahren nach einem der vorhergehenden Ansprüche, **dadurch gekennzeichnet, dass** das Bereitstellen des Beschichtungsmittels ein kontinuierliches Nachfüllen in den Behälter umfasst, und dass der Behälter mit einem Überlauf versehen ist, aus dem überschüssiges Beschichtungsmittel entfernt wird.

10. Vorrichtung zur Beschichtung eines zylinderförmigen Bauteils aus Glas mit einer Funktionsschicht, wobei das Glas-Bauteil eine Längsachse und eine senkrecht dazu verlaufende und von einer Bauteil-Kontur definierte Querschnittsfläche aufweist, umfassend einen Behälter zur Aufnahme eines Tauchbades aus einem flüssigen oder pastösen Beschichtungsmittel, **dadurch gekennzeichnet, dass** der Behälter einen an die Bauteil-Kontur angepassten Durchlass aufweist, und mit einem Linearantrieb zur translatorischen Verschiebung des Behälters entlang der Bauteil-Längsachse in vertikaler Richtung verbunden ist.

11. Vorrichtung nach Anspruch 10, **dadurch gekennzeichnet, dass** der Durchlass von mindestens einem elastisch verformbaren Dichtelement begrenzt wird, das zwischen einem oberen und einem unteren Kompressionskörper angeordnet ist, wobei die Kompressionskörper mittels mindestens eines Zug- oder Spannelementes gegeneinander und gegen das Dichtelement verschiebbar sind und infolge dieser Verschiebung das Dichtelement so verformbar ist, dass sich der Durchlass verengt, und dass im Durchlass ein am Dichtelement anliegendes Gleitelement vorgesehen ist, das elektrisch leitfähig ist und vorzugsweise Kohlenstoff enthält.

12. Vorrichtung nach einem der Ansprüche 10 oder 11, **dadurch gekennzeichnet, dass** der Durchlass einen ebenen oder gekrümmten Spalt bildet.

13. Vorrichtung nach einem der Ansprüche 10 bis 12, **dadurch gekennzeichnet, dass** der Behälter mit einer Zufuhrleitung für das Beschichtungsmittel und mit einem Überlauf zum Entfernen von überschüssigem Beschichtungsmittel versehen ist.

14. Vorrichtung nach einem der Ansprüche10 bis 13, **dadurch gekennzeichnet, dass** der Linearantrieb mit einer Trocknungseinrichtung verbunden und mittels oberhalb des Tauchbades in Richtung der Bauteil-Längsachse bewegbar ist.

15. Vorrichtung nach einem der Ansprüche10 bis 14, **dadurch gekennzeichnet, dass** der Behälter eine Höhe im Bereich zwischen 5 und 30 cm hat.
